# FASCICULE DE BREVET EUROPEEN

(11) **EP 2 142 622 B1**
(45) Date de publication et mention de la délivrance du brevet: **24.05.2017**
(21) Numéro de dépôt: 07872392.1
(22) Date de dépôt: 17.12.2007
(51) Int. Cl.: C10J 3/64, C10K 1/32, B01D 53/86

(54) **PROCEDE DE PRODUCTION D'UN GAZ DE SYNTHESE PURIFIE A PARTIR DE BIOMASSE INCLUANT UNE ETAPE DE PURIFICATION EN AMONT DE L'OXYDATION PARTIELLE**
VERFAHREN ZUR ERZEUGUNG EINES GEREINIGTEN SYNTHESEGASES AUS EINER BIOMASSE MIT EINEM DER PARTIELLEN OXIDIERUNG VORGELAGERTEN REINIGUNGSSCHRITT
METHOD FOR PRODUCING A PURIFIED SYNTHESIS GAS FROM A BIOMASS INCLUDING A PURIFICATION STEP UPSTREAM FROM THE PARTIAL OXIDATION

(30) Priorité: 22.12.2006 FR 0611411
(43) Date de publication de la demande: 13.01.2010
(73) Titulaire: IFP Énergies nouvelles, 92852 Rueil-Malmaison Cedex (FR); Commissariat A L'Energie Atomique, 75015 Paris (FR)
(72) Inventeur: ROLLAND, Mathieu, F-69390 Vernaison (FR); LEMAIRE, Eric, F-69480 Anse (FR); BOUDET, Nicolas, F-69630 Chaponost (FR); SELLER, Jean-Marie, F-38360 Seyssins (FR); ROUGE, Sylvie, F-38320 Brie et Angonnes (FR)
(86) Numéro de dépôt international: PCT/FR2007/002105
(87) Numéro de publication internationale: WO 2008/093012

(56) Documents cités:
- WO-A-01/68789
- WO-A-94/29410
- WO-A-2006/043112
- DE-A1- 10 047 787
- FR-A- 2 861 402
- US-A- 4 436 532

## Description

### DOMAINE DE L'INVENTION:

La présente invention concerne un procédé de production de gaz de synthèse purifié à partir de biomasse ligno-cellulosique qui comprend au moins une étape de pyrolyse, au moins une étape d'oxydation partielle, et au moins une étape de purification, ladite étape de purification étant située en aval de l'étape de pyrolyse et en amont de l'étape d'oxydation partielle.
Le gaz de synthèse produit selon le procédé de la présente invention ne contient aucune impureté soufrée, est débarrassé de toutes particules solides, et possède un rapport molaire H2/CO qui est défini à la valeur correspondant à l'application envisagée.
Dans le cas d'une application à la synthèse Fischer-Tropsch en vue de produire des carburants liquide, ce rapport molaire H2/CO se situe dans l'intervalle 1,1 à 2,3.
Plus généralement, le gaz de synthèse obtenu par le procédé selon la présente invention peut avoir un rapport molaire H2/CO à une valeur quelconque comprise entre 1,0 et 3,5, la valeur précise dépendant de l'application ultérieure.

### ART ANTERIEUR

Pour souligner l'amélioration apportée par le procédé selon l'invention, nous examinerons plus particulièrement son impact sur la conversion de biomasse en carburants liquide par gazéification connue sous le terme de chaîne BTL. Cette chaîne est actuellement basée sur la succession d'étapes suivantes:
- préparation de la biomasse en vue de son introduction dans l'unité de gazéification, cette étape comportant un traitement thermique doux en absence d'air généralement appelé torréfaction, suivie d'un broyage de la partie solide en vue de réaliser la granulométrie souhaitée en entrée de l'unité de gazéification,
- gazéification de la biomasse avec de l'oxygène, et production d'un gaz de synthèse majoritairement constitué de monoxyde de carbone et d'hydrogène,
- purification de ce gaz de synthèse par un ensemble de procédés liés à la nature des impuretés,
- ajustement du rapport H2/CO par la réaction de conversion du CO (dite de "shift conversion" et correspondant au schéma réactionnel CO+ H2O ↔ CO2+H2)
- synthèse Fischer-Tropsch (en abrégée synthèse FT),
- hydrocraquage des effluents de la synthèse FT en vue de maximiser la production de coupe gazole.

Dans un autre procédé de l'art antérieur, la charge biomasse est envoyée dans une unité de pyrolyse à haute sévérité produisant un effluent gazeux et un effluent solide, les deux effluents étant ensuite introduits dans une unité de gazéification.

La demande de brevet publiée sous le numéro FR 2 861 402 décrit par exemple une chaîne BTL selon l'art antérieur. Pour ce qui concerne les chaînes BTL de l'art antérieur, la purification du gaz de synthèse est donc réalisée en aval de l'unité de gazéification, alors que dans le procédé selon l'invention, elle est réalisée en amont. Ce positionnement en amont présente le premier avantage de réduire la consommation d'oxygène puisque les impuretés éliminées n'ont pas à subir ladite gazéification.

Par rapport à une chaîne BTL conventionnelle, les autres avantages de la présente invention sont les suivants:
- la purification du gaz de pyrolyse est réalisée à une température élevée, ce qui est favorable du point de vue énergétique,
- le procédé dans son ensemble est simplifié par une diminution du nombre d'étape unitaire du procédé
- les difficultés techniques et les coûts associés dus à la corrosivité des impuretés sur les réfractaires et métaux des équipements sont considérablement réduits.
- les risques d'empoisonnement du catalyseur utilisé dans l'unité en aval de la gazéification, par exemple une unité de synthèse FT, sont réduits en cas de défaillance des unités de purification du gaz de synthèse.
- la purification préalable du gaz de synthèse permet l'utilisation d'équipements pour la récupération thermique, ce qui n'est pas possible dans une chaîne BTL selon l'art antérieur dans laquelle le refroidissement est obligatoirement réalisé par mélange avec de l'eau sans possibilité de récupération de chaleur.
- le gaz de pyrolyse est relativement riche en élément hydrogène, ce qui pourrait conduire à un gaz de synthèse ayant un rapport H2/CO mieux adapté à une synthèse Fischer-Tropsch ultérieure.

Le document DE10047787 décrit un procédé comprenant une étape de pyrolyse suivie d'une étape de lavage des gaz ainsi obtenus. Il ne décrit pas l'adsorption des composés soufrés sur un adsorbant à base de Co-Mo ou ZnO.

### DESCRIPTION SOMMAIRE DE L'INVENTION:

L'invention concerne un procédé de production d'un gaz de synthèse purifié avec un rapport molaire H2/CO contrôlé à partir de biomasse lignocellulosique, faisant appel à l'enchaînement d'étapes suivant:
A) une étape de pyrolyse sévère à température comprise entre 500°C et 900°C et préférentiellement entre 750°C et 850°C, produisant un effluent gazeux qui est envoyé à une étape de purification, et un résidu solide concentrant la majorité des impuretés métalliques, notamment les composés alcalins, ainsi qu'une partie des composés soufrés,
B) une étape de purification du gaz de pyrolyse consistant essentiellement en un dépoussiérage du gaz et une captation des composés soufrés sur des masses adsorbantes à base de ZnO ou de Co-Mo,
C) une étape d'oxydation partielle réalisée par mise en contact de la charge constituée par le gaz purifié issu de l'étape B avec de l'oxygène à un niveau de pureté supérieur à 90%, à une température de réaction comprise entre 1000°C et 1600°C, sous une pression comprise entre 2,5 MPa et 4 MPa, ladite étape produisant un gaz de synthèse majoritairement constitué de monoxyde de carbone et d'hydrogène dans un rapport molaire H2/CO compris entre 0,5 et 1,5 en fonction du type de charge utilisée,
D) une étape de refroidissement rapide du gaz de synthèse issu de l'étape C à une température comprise entre 300°C et 500°C.
Le procédé selon l'invention peut selon une première variante comprendre en outre une étape E de conversion du monoxyde de carbone sur une partie du flux de gaz de synthèse comprise entre 30% et 70%, permettant d'atteindre après mélange avec le flux n'ayant pas subi la conversion du monoxyde de carbone, un rapport molaire H2/CO correspondant à l'utilisation ultérieure du gaz de synthèse.

Selon une seconde variante, dans l'étape C d'oxydation partielle, la charge est constituée par le gaz purifié produit à l'étape B mélangé avec un hydrocarbure additionnel possédant un rapport H/C supérieur à celui de la biomasse.

Il est également possible de combiner ces deux variantes afin d'ajuster le rapport molaire H2/CO.

Le procédé selon la présente invention permet de produire un gaz de synthèse purifié, c'est à dire libéré des impuretés initialement contenues dans la charge biomasse, notamment les diverses impuretés solides et une partie des composés soufrés.

Ce gaz de synthèse purifié peut être utilisé comme charge d'une unité de synthèse Fischer-Tropsch en vue de produire des carburants liquides, mais aussi comme gaz pour la synthèse de l'ammoniac ou la synthèse du méthanol, voire même d'alcools plus lourds, ou la synthèse du DME ( abréviation de diméthyl-éther).

### DESCRIPTION SOMMAIRE DES FIGURES

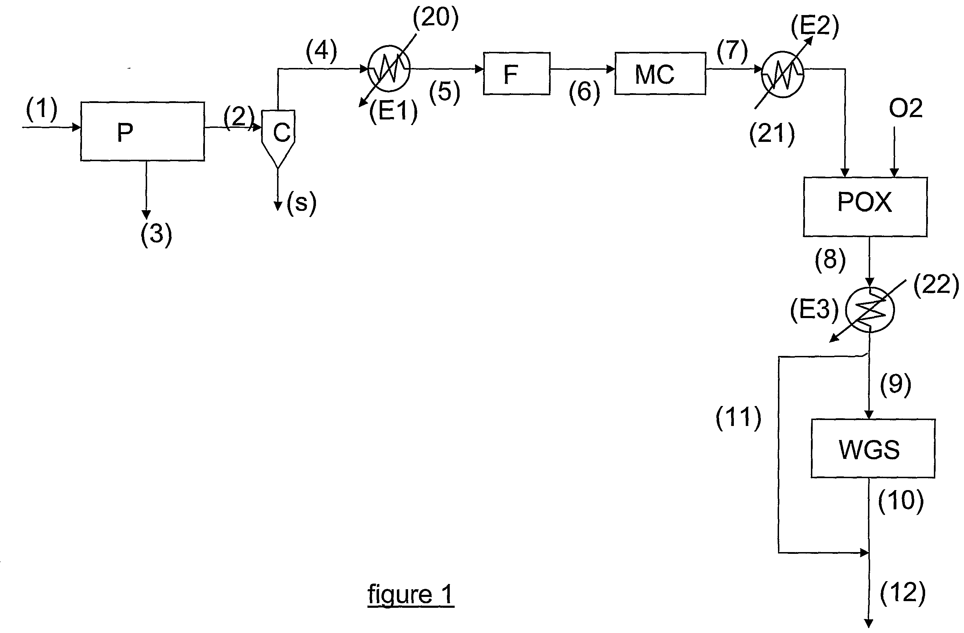

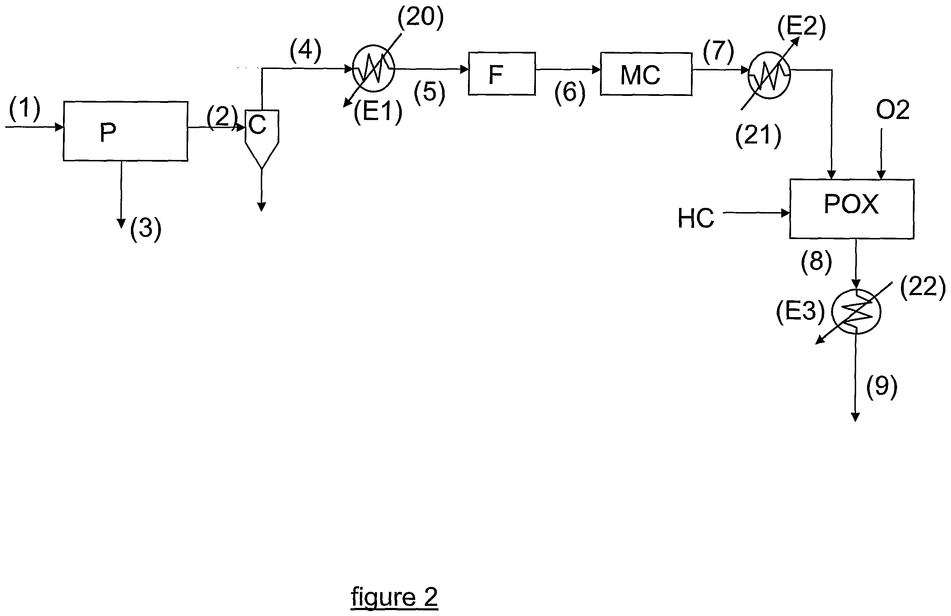

Deux variantes préférées du procédé selon l'invention sont présentées dans les figures 1 et 2, ces variantes se distinguent notamment par la présence ou non d'une unité de conversion du monoxyde de carbone.
La figure 1 décrit un schéma de procédé selon une première variante préférée selon l'invention. Dans cette première variante, on utilise une unité de conversion du CO pour ajuster le rapport H2/CO du gaz de synthèse à la valeur adaptée à la synthèse Fischer-Tropsch, ou à la synthèse de l'ammoniac, ou à la synthèse du méthanol, selon l'application choisie.
La figure 2 décrit un schéma du procédé selon une seconde variante du procédé selon l'invention. Dans la seconde variante, on utilise au niveau de l'étape d'oxydation partielle une charge additionnelle qui est constituée d'un hydrocarbure de rapport H/C supérieur à celui de la biomasse, de manière à modifier le rapport du gaz de synthèse et à pouvoir ainsi éliminer l'étape de conversion du CO.

### DESCRIPTION DETAILLEE DE L'INVENTION:

La présente invention peut se définir comme un procédé de production d'un gaz de synthèse purifié à partir de biomasse, le terme purifié signifiant que ce gaz de synthèse ne contient plus aucune des impuretés initialement présentes dans la charge biomasse.

Les charges biomasse concernées par la présente invention sont des charges de type lignocellulosique telles que des déchets de bois ou de paille. Les produits lignocellulosiques sont principalement formés de lignines et de cellulose. Les impuretés contenues dans ce type de charge biomasse lignocellulosiques sont essentiellement des impuretés solides, des métaux en particulier alcalins ( Na, K), et des composés soufrés, ainsi que des composés chlorés et azotés.

L'ensemble des opérations de purification dans une chaîne BTL selon l'art antérieur est réalisé sur le gaz issu de la gazéification avant l'introduction du gaz purifié dans l'étape de synthèse Fischer-Tropsch.
L'objet de la présente invention est de proposer un procédé de production de gaz de synthèse dans lequel la purification est rassemblée en une seule étape, dite étape de purification, placée en amont de l'étape de gazéification, de sorte que le gaz de synthèse issu de l'étape d'oxydation partielle puisse être directement introduit dans l'étape de synthèse Fischer-Tropsch, après un ajustement éventuel du rapport molaire H2/CO qui peut être réalisé dans une unité de conversion du monoxyde de carbone.

L'innovation introduite par la présente invention consiste donc à effectuer une oxydation partielle en utilisant comme charge un gaz de pyrolyse de biomasse purifié, c'est-à-dire une charge propre, ne contenant plus aucune des impuretés citées ci-dessus. Une grande partie des impuretés initialement contenues dans le gaz de pyrolyse, se trouveront fixées dans le solide de pyrolyse ( métaux dont les composés alcalins, et une partie des composés soufrés, ...), et le traitement du gaz de pyrolyse sera beaucoup plus simple que celui du gaz de synthèse issu de la gazéification (syngas selon la terminologie anglo-saxonne) dans une chaîne BTL selon l'art antérieur.

Selon une première variante l'invention concerne un procédé de production d'un gaz de synthèse purifié à partir de biomasse lignocellulosique ayant un rapport molaire H2/CO contrôlé, et comprenant les étapes suivantes:
A) une étape de pyrolyse sévère à température comprise entre 500°C et 900°C et préférentiellement entre 750°C et 850°C, permettant de produire un effluent gazeux qui est envoyé à une étape de purification, et un résidu solide concentrant la majorité des impuretés, notamment les composés alcalins, et une partie des composés soufrés,
B) une étape de purification du gaz de pyrolyse issu de l'étape A consistant essentiellement en un dépoussiérage du gaz et une captation des composés soufrés sur des masses adsorbantes à base de ZnO ou de Co-Mo,
C) une étape d'oxydation partielle réalisée par mise en contact du gaz purifié issu de l'étape B avec de l'oxygène à un niveau de pureté supérieur à 90%, à une température de réaction comprise entre 1000°C et 1600°C, sous une pression comprise entre 2,5 MPa et 4 MPa, ladite étape produisant un gaz de synthèse majoritairement constitué de monoxyde de carbone et d'hydrogène dans un rapport molaire H2/CO compris entre 0,5 et 1,5 en fonction du type de charge biomasse utilisée,
D) une étape de refroidissement rapide du gaz de synthèse produit à l'étape C à une température comprise entre 300°C et 500°C,
E) une étape de conversion du monoxyde de carbone concernant généralement une partie du flux de gaz de synthèse, de préférence comprise entre 30% et 70%, permettant d'atteindre après mélange avec le flux qui n'a pas subi la conversion du monoxyde de carbone, un gaz de synthèse ayant un rapport molaire H2/CO correspondant à l'utilisation ultérieure du gaz de synthèse.

Ainsi par exemple, il est possible d'utiliser le gaz de synthèse selon l'invention:
a) Pour la synthèse FT d'hydrocarbures, le rapport molaire H2/CO de la charge comprenant le gaz de synthèse est généralement compris entre 1,1 et 1,3 sur catalyseur à base de fer, et généralement compris entre 2,0 et 2,3 sur catalyseur à base de cobalt.
b) Pour la synthèse de l'ammoniac, qui nécessite essentiellement de l'hydrogène, la conversion du monoxyde de carbone (CO) en hydrogène (H2) est maximisée, le CO et le CO2 sont généralement intégralement extraits du flux.
c) Pour la synthèse de méthanol ou de diméthyléther, le rapport H2/(CO+CO2) de la charge comprenant le gaz de synthèse est généralement compris entre 1,7 et 2,3 avec au plus 10% de CO2.

Le gaz de synthèse purifié selon l'invention peut également être utilisé seul ou en mélange avec du gaz naturel pour la production d'électricité, par exemple à l'aide d'une turbine à gaz.

Quand on parle dans la suite du texte de rapport molaire H2/CO correspondant à l'application choisie, c'est au sens des valeurs données aux trois alinéas a), b), c) précédents.

Selon une seconde variante, le procédé selon l'invention est un procédé de production d'un gaz de synthèse purifié à partir de biomasse lignocellulosique, ayant un rapport molaire H2/CO contrôlé, et comprenant les étapes suivantes:
A) une étape de pyrolyse sévère à température comprise entre 500°C et 900°C, et préférentiellement entre 750°C et 850°C, permettant de produire un effluent gazeux qui est envoyé à une étape de purification, et un résidu solide concentrant la majorité des impuretés, notamment les composés alcalins, et une partie des composés soufrés,
B) une étape de purification du gaz de pyrolyse issu de l'étape A consistant essentiellement en un dépoussiérage du gaz et une captation des composés soufrés sur des masses adsorbantes à base de ZnO ou de Co-Mo,
C) une étape d'oxydation partielle réalisée par mise en contact du gaz purifié issu de l'étape B avec de l'oxygène à un niveau de pureté supérieur à 90%, mais dans cette seconde variante la charge de l'étape C est constituée par le gaz purifié produit à l'étape B mélangé avec un hydrocarbure additionnel possédant un rapport H/C supérieur à celui de la charge biomasse, à une température de réaction comprise entre 1000°C et 1600°C, sous une pression comprise entre 2,5 MPa et 4 MPa, ladite étape produisant un gaz de synthèse majoritairement constitué de monoxyde de carbone et d'hydrogène dans un rapport molaire H2/CO correspondant à l'application choisie.
D) une étape de refroidissement rapide du gaz de synthèse issu de l'étape C à une température correspondant à l'application choisie.

Les avantages principaux du procédé selon l'invention sont les suivants :
- la réduction de la quantité d'oxygène nécessaire à la gazéification par oxydation partielle, car les impuretés combustibles éliminées en amont, ne sont donc plus gazéifiées.
- la purification du gaz de pyrolyse est réalisée à une température élevée, ce qui est favorable du point de vue énergétique (baisse des coûts d'oxygène du gazéifieur).
- le gaz de pyrolyse est relativement riche en élément hydrogène, ce qui conduit à un gaz de synthèse possédant un rapport molaire H2/CO particulièrement bien adapté à l'étape de synthèse FT. Dans la seconde variante du procédé selon l'invention, l'étape d'ajustement du rapport H2/CO n'est même plus nécessaire.

### Étape de préparation de la biomasse (facultative)

La préparation de la biomasse consiste généralement en un séchage réalisé à une température comprise entre 150°C et 280°C, permettant d'arriver à une teneur en eau de la biomasse à traiter d'environ 10 % poids.
Le prétraitement peut consister en un traitement thermique permettant d'ajuster l'humidité (par séchage), et éventuellement de fragiliser la biomasse par un traitement thermique doux, quelquefois appelé torréfaction, en absence d'air, et dont une description peut être trouvée dans la demande de brevet français 06/07.049, suivie d'un broyage permettant d'ajuster la granulométrie à la valeur désirée avant l'entrée dans le four de pyrolyse.

### Étape de pyrolyse (étape A)

L'étape de pyrolyse a pour objectif de produire un gaz à partir de biomasse éventuellement prétraitée.
L'état de l'art sur la pyrolyse enseigne que le rendement gaz est maximal avec une pyrolyse sévère, c'est-à-dire un chauffage très rapide de la biomasse à des températures de l'ordre de 600°C-800°C réalisée avec des temps de contact limités à quelques secondes, voire inférieurs à la seconde.
La pyrolyse sévère est le procédé préféré dans le cadre de la présente invention, cependant d'autres types de pyrolyse sont néanmoins envisageables.
La fraction de biomasse non volatilisée par la pyrolyse se retrouve sous forme d'un solide comportant majoritairement du carbone (C) et de l'hydrogène (H).
Ce solide contient également la majorité des impuretés contenues dans la charge biomasse, notamment les éléments alcalins (tels que le potassium et le sodium), , les diverses particules solides telles que les cendres , et également une partie des composés soufrés.
Le solide de pyrolyse a une composition en terme de rapport C/H, intermédiaire entre la lignite, le charbon et le coke.

Il peut être valorisé énergétiquement comme combustible, et en particulier être utilisé comme combustible pour apporter une partie de la chaleur nécessaire à l'étape de pyrolyse.
La combustion du solide de pyrolyse in situ peut également servir à l'alimentation des chaudières de production de la vapeur nécessaire pour l'étape de production de gaz de synthèse (étape C), ou pour la production d'utilités, notamment d'électricité, ou encore pour fournir au moins en partie la chaleur nécessaire à la pyrolyse. Ces différentes utilisations du solide de pyrolyse comme combustible ne sont pas développées, car elles sont considérées comme des utilisations connues de l'homme du métier.
Le solide de pyrolyse peut, après traitement, être utilisé comme charbon actif en vue d'application comme adsorbant.

La chaleur nécessaire à l'étape de pyrolyse peut également être apportée par échange indirect de chaleur avec le gaz de synthèse chaud issu de l'étape C décrite ci-après. L'intérêt de cet échange est de permettre simultanément le refroidissement rapide du gaz de synthèse. Cet échange peut être réalisé dans un four à double paroi, tel que celui utilisé dans le procédé de traitement des déchets dont on trouvera une description dans le brevet EP 0686 686 B1, ou via un fluide caloporteur intermédiaire tel que de la vapeur, ou via un solide inerte tel que le sable.

Le procédé selon la présente invention n'est pas lié à une technologie particulière pour réaliser l'étape de pyrolyse. L'intérêt d'une purification du gaz issu de la pyrolyse en amont de l'étape ultérieure de production du gaz de synthèse (étape C) est considérable. En effet, outre les avantages déjà mentionnés, il convient de souligner que dans une chaîne BTL conventionnelle, les impuretés, notamment soufrées, contenus dans le gaz de charge de l'étape de production du gaz de synthèse se retrouvent totalement dans le gaz de synthèse produit. Or le soufre est un poison des catalyseurs utilisés dans la synthèse FT. De plus, les impuretés métalliques, et en particulier les alcalins, contenues dans le gaz de charge ont des effets néfastes sur la tenue des réfractaires dans le temps et sur la corrosion des équipements métalliques. Le fait d'éliminer les impuretés contenues dans le gaz de charge en amont de l'étape d'oxydation partielle est donc un avantage important.

### Étape de purification du gaz de pyrolyse (étape B) :

Le gaz de pyrolyse contient majoritairement les molécules gazeuses obtenues après pyrolyse, c'est à dire essentiellement des hydrocarbures plus ou moins oxygénés de petites tailles, tels que des alcanes pouvant posséder jusqu'à 4 atomes de carbone, des alcool, des acides. Ces diverses molécules conduisent à la production d'hydrogène et monoxyde de carbone lors de l'étape ultérieure de production du gaz de synthèse.
Le gaz de pyrolyse peut également contenir des molécules soufrées (H2S et COS). Les composés soufrés sont connus pour être des poisons du catalyseur de POX. Des lits de garde contenant du ZnO ou Co-Mo permettront d'abattre les concentrations aux teneurs requises, c'est à dire inférieures à 100 ppb en poids , et préférentiellement inférieures à 10 ppb poids (l'unité ppb signifie partie par billion (1 billion =10⁹).
Le gaz de pyrolyse contient aussi des poussières de diverses particules imbrûlées, des particules de carbone redéposé, et de rares cendres volantes. Ces poussières solides peuvent être arrêtées au moyen d'une combinaison des moyens suivants :
- cyclones
- filtre céramique (selon la technologie des filtres chandelles ou des fibres céramiques tissées) ou métalliques
- lit fixe pour filtration en profondeur

Dans les opérations de filtration, on utilise préférentiellement plusieurs filtres en parallèle pour assurer la continuité du service lors des décolmatages et/ou des remplacements.
Dans le cadre de la présente invention, l'enchaînement préféré pour réaliser l'étape de purification est en premier lieu la séparation des poussières suivie de l'élimination des composés soufrés sur des masses de captation à base de ZnO ou de Co-Mo. De cette manière, les masses de captation ne sont pas obstruées par les poussières du procédé. Cependant, dans une variante du procédé selon l'invention, les masses de captation peuvent aussi être utilisées comme filtre en profondeur et dans ce cas, être situées en aval d'un ou plusieurs étages de cyclones.
La captation des composés soufrés lors de l'étape de purification du gaz de charge de l'étape d'oxydation partielle peut donc être réalisée sur des masses de captation à base de ZnO ou de Co-Mo qui sont mis en oeuvre sous forme de lits de filtration. La filtration est alors réalisée en passant le gaz à purifier au travers d'un ou plusieurs réacteurs radiaux ou axiaux remplis de solides sous formes de billes ou extrudés. Le gaz diffuse à l'intérieur des pores des solides. Les composés soufrés sont capturés en surface des pores. Après une durée d'utilisation dépendant des concentrations en composés soufrés et du volume du lit, les masses de captation sont saturées et remplacées. La durée de vie des masses est supérieure à 1 mois, préférentiellement 3 mois.
Ces opérations sont généralement réalisées à température élevée comprises entre 300°C et 800 °C, ce qui permet en outre un gain intéressant sur la consommation d'énergie (utilités et oxygène).
Parmi les avantages de la purification selon la présente invention, on peut citer le fait qu'une grande partie desdites impuretés restent dans le solide de pyrolyse. C'est le cas notamment des composés alcalins et d'une partie des composés soufrés.
On peut noter également que la purification du gaz de pyrolyse est beaucoup plus simple que celle du gaz de synthèse. La valeur du rapport molaire H2/CO résultant permet en effet de supprimer éventuellement la réaction de conversion du monoxyde de carbone (Water Gas Shift reaction ou WGS selon la terminologie anglo-saxonne).
Un gain important en consommation d'oxygène est également réalisé lors de l'étape d'oxydation partielle dans la mesure où il n'est pas nécessaire d'oxyder les impuretés concentrées sur le solide carboné à faible teneur en hydrogène, Enfin, le gaz de pyrolyse arrive déjà relativement chaud à l'entrée de l'étape de POX du fait de la purification réalisée à haute température typiquement comprise entre 500°C et 800°C.

### Étape d'oxydation partielle du gaz de pyrolyse(étape C):

L'oxydation partielle (que l'on appellera POX au sens large, même lorsque cette étape inclus un vaporefomage) est opérée sur un gaz purifié issu de l'étape de pyrolyse décrite au paragraphe précédent.

L'oxydation partielle à l'oxygène peut éventuellement être combinée avec un vaporeformage.
Les conditions opératoires de l'étape de POX dans le cadre de la présente invention sont préférentiellement :
- température supérieure à 1200°C pour minimiser le rendement en méthane, goudrons et suies,
- pression comprise entre 2,5 MPa et 4 MPa de manière à alimenter le réacteur de synthèse FT à la pression optimale

Un aspect essentiel des technologies d'oxydation partielle est de réaliser l'oxydation en minimisant et de préférence supprimant la production de suies, ce qui peut-être obtenu par ajout d'eau et par un design optimisé de la chambre de combustion.
Le gaz de pyrolyse étant composé de molécules légères, ayant généralement de 1 à 4 atomes de carbone, il est possible d'utiliser les différentes technologies de POX disponibles. Les plus performantes permettent une baisse de la consommation d'oxygène et d'obtenir un meilleur rapport H2/CO par l'utilisation éventuelle d'eau, à savoir
- POX thermique dans laquelle l'oxydation partielle en présence d'oxygène est réalisée à haute température, typiquement supérieure à 1200°C
- POX catalytique dans laquelle un catalyseur permet de favoriser la conversion totale à plus basse température (800-1000°C)
- ATR (Autothermal Reforming selon la terminologie anglo-saxonne) : dans laquelle l'oxydation partielle exothermique est combinée avec un vaporeformage endothermique.
- "Compact Reformer" qu'on peut traduire par reformage compact, unité dans laquelle la réaction est réalisée dans un échangeur contenant le catalyseur.

Les technologies de POX catalytiques nécessitent que la teneur en soufre du gaz de charge soit inférieure à 50-100 ppb poids, ce qui implique généralement l'utilisation de masses de garde (ZnO ou Co-Mo).
Cette teneur est effectivement atteinte dans le cadre de la présente invention par l'utilisation des lits de captation des composés soufrés décrits au paragraphe précédent, ce qui permet donc d'utiliser les technologies POX catalytique.
Du fait de la présence d'une plus grande quantité d'hydrogène dans le gaz de pyrolyse que dans la biomasse, le rapport molaire H2/CO du gaz de synthèse issu de la POX est mieux adapté à une synthèse Fischer-Tropsch. Ce rapport molaire est généralement supérieur à 1 à l'issue de la POX, alors qu'il est compris entre 0,5 et 0,8 pour le gaz issu d'une gazéification directe de biomasse.
Si le rapport molaire H2/CO est insuffisant (la valeur optimale dépendant en grande partie du type de catalyseur utilisé dans la synthèse FT), deux voies permettent de l'ajuster :
- l'utilisation d'une unité dite de conversion du monoxyde de carbone (CO-Shift) qui convertit le monoxyde de carbone en présence d'eau en un mélange de dioxyde de carbone et d'hydrogène. C'est la voie suivie dans la première variante du présent procédé.
- une co-gazéification avec un gaz d'appoint plus riche en hydrogène sans conversion du monoxyde de carbone. Ce gaz riche en hydrogène peut être un hydrocarbure léger (gaz naturel, LPG, ...) ou être un "bio-gaz" issu de fermentation, de compostage, ou de la récupération de gaz de décharge. C'est la voie suivie dans la seconde variante du présent procédé.

### Étape de refroidissement rapide du gaz de synthèse (étape D):

A la sortie de l'unité d'oxydation partielle, le gaz de synthèse doit être refroidi très rapidement pour arrêter les réactions de conversion et conserver les concentrations obtenues à haute température. Le système de refroidissement rapide (appelé "quench" dans la terminologie anglo saxonne) est typiquement assuré par échange de chaleur sous forme de production de vapeur haute pression (HP) ou moyenne pression (MP), ou par mélange avec de l'eau (spray, bullage...).

Dans la présente invention, il est possible de refroidir le gaz de synthèse par échange indirect avec la biomasse en amont de l'étape de pyrolyse. Cet échange permet à la fois de refroidir le gaz de synthèse mais aussi de réchauffer la biomasse à un niveau de température compris entre 50°C et 300 °C avant son introduction dans l'unité de pyrolyse.
On peut pour réaliser cet échange utiliser les technologies de four à double paroi avec utilisation d'un média caloporteur intermédiaire sous forme gaz (vapeur, air chaud) ou liquide (sels fondus), ou bien le mélange avec un solide granulaire (technologies de type lit fluidisé):
- Sous forme gaz, le caloporteur est chauffé ou vaporisé par échange de chaleur avec le gaz de synthèse chaud, puis est envoyé dans l'enveloppe externe d'un four tournant à double paroi, la biomasse étant injectée à l'intérieur du four tournant. Le gaz caloporteur cède sa chaleur à la biomasse par conduction et rayonnement.
- Sous forme liquide, le caloporteur est chauffé par échange de chaleur avec le gaz de synthèse chaud, puis utilisé comme source de chaleur dans un échangeur pour chauffer la biomasse. Des sels fondus (NaCl, KCl) doivent être utilisés pour rester liquide à ces températures.
- Sous forme solide, le caloporteur est un solide inerte de taille comprise entre 0,1 mm et 1 mm qui est chauffé par mélange avec un gaz chaud, soit le gaz de synthèse lui-même, soit de préférence un gaz chauffé par le gaz de synthèse. Le solide et le gaz chaud sont séparés dans un cyclone, le solide chaud est alors mélangé avec la biomasse dans un flux gazeux. La biomasse se réchauffe au contact du solide puis est séparée du solide refroidi qui est renvoyé à la section de chauffage. La séparation biomasse / solide caloporteur est basée sur une différence de comportement dans un flux gazeux lié à la différence de masse volumique des particules solides.

Dans le cas présent, les particules de solide caloporteur sont emportées par le flux gazeux vertical ascendant, alors que les particules de biomasse restent en majeure partie en bas du réacteur. Cette technologie est très proche de celle utilisée dans le FCC (Fluid Catalytique Cracking selon la terminologie anglo-saxonne ou craquage catalytique en lit fluidisé).

### Étape de conversion du monoxyde de carbone (étape E):

Cette étape de conversion du monoxyde de carbone concerne généralement une partie du flux de gaz de synthèse, de préférence comprise entre 30% et 70% en volume. Elle permet d'atteindre après mélange avec le flux n'ayant pas subi la conversion du monoxyde de carbone, un gaz de synthèse qui présente un rapport molaire H2/CO correspondant à l'application choisie.

### Description première variante du procédé selon l'invention (avec conversion du CO, figure 1):

La charge biomasse (1) est supposée disponible à environ 10% humidité Elle est mise en pression au moyen d'une technologie standard ( piston, sas, dispositifs rotatifs).
La charge biomasse (1) est introduite dans le four de pyrolyse (P) à une température comprise entre 700°C et 900°C, préférentiellement entre 750°C et 850°C, et sous une pression d'environ 3 MPa. La mise en pression à 3 MPa peut être réalisée avant la pyrolyse, ou préférentiellement après par compression des gaz chauds traités avant leur introduction dans l'étape de production de gaz de synthèse.
L'étape de pyrolyse produit un effluent gazeux (2) représentant entre 50 % et 90% de la biomasse introduite, et un résidu solide (3) représentant le complément. L'effluent gazeux (2) chargé en particules solides est introduit dans un ou plusieurs étages de séparation cyclonique noté (C) sur la figure 1.
L'effluent gazeux dépoussiéré (4) est refroidi de 800°C à 500°C par un échange indirect avec le fluide (20) dans un échangeur (E1).
L'effluent gazeux dépoussiéré et refroidi (5) est filtré à 500°C, sous une pression d'environ 3 MPa sur un filtre céramique (F), ce qui permet de réduire la teneur en particules solides dans ledit effluent gazeux à moins de 1 gramme par m3, et préférentiellement à moins de 0,5 gramme par m3 de gaz.
Le gaz après filtration (6) est envoyé sur des masses de captation (MC) à 500°C, sous 2,9 MPa de manière à éliminer les composés soufrés.
Le gaz purifié et dépoussiéré (7) est réchauffé dans un échangeur (E2) avec un fluide caloporteur (21).

L'étape d'oxydation partielle (POX) est réalisée par mise en contact du gaz de pyrolyse purifié et dépoussiéré (7) avec de l'oxygène présentant un degré de pureté supérieur à 90% en volume (%vol.), et préférentiellement supérieur à 95%vol., dans un réacteur d'oxydation partielle
La technologie utilisée pour le réacteur d'oxydation n'est pas un élément caractéristique de la présente invention. Il est possible par exemple d'utiliser un réacteur de POX thermique ou catalytique.

Le rapport molaire H2/CO en sortie du réacteur de POX est situé entre 0,5 et 1,3 selon la charge.
Ce rapport doit être le plus proche possible de la valeur requise pour l'unité de synthèse ultérieure. Dans le cas d'une synthèse FT, le rapport molaire H2/CO sera compris entre 1,1 et 2,2 selon le type de catalyseur utilisé.
Avec un rapport molaire H2/CO = 1, la composition molaire de l'effluent gaz issu de la POX (8) est typiquement (en % volume):
▪ H2 : 35-45%
▪ CO : 35-45%
▪ CO2 : 10-15%
▪ N2 : environ 5%
▪ Méthane : < 0.1%
▪ Autres (azotés) : < 5%

La température est comprise entre 1200°C et 1600°C, et préférentiellement voisine de 1400°C, et la pression est généralement comprise entre 2,5 MPa et 4 MPa.
La conversion est généralement supérieure à 95%, et préférentiellement supérieure à 99%.
L'effluent (8) de la POX est envoyé vers un échangeur (E3) pour être refroidi à une température comprise entre 300°C et 600°C.
Le refroidissement de l'effluent (8) est réalisé par échange sur un fluide process (22).
Le fluide (22) est préférentiellement de l'eau haute pression (HP) qui est vaporisé en vapeur HP.

Une partie de l'effluent refroidi (9) est envoyé dans une unité de conversion du CO qui modifie le rapport H2/CO en l'amenant à la valeur convenable pour l'application envisagée.
La proportion du flux (9) est réglée de manière à ajuster le rapport H2/CO du fluide (12) à la valeur requise en entrée de l'étape de synthèse FT ( non représentée sur la figure 1). L'effluent (10) de la réaction de conversion du CO est remélangé avec la partie (11) de l'effluent de la POX qui n'a pas subi la réaction de conversion du CO, de manière à produire un gaz de synthèse (12) purifié, dépoussiéré et possédant le rapport molaire H2/CO à la valeur voulue.

### Description de la seconde variante du procédé selon l'invention( avec oxydation partielle d'un hydrocarbure additionnel, figure 2):

La charge biomasse (1) est supposée disponible à environ 10% humidité Elle est mise en pression au moyen d'une technologie standard (piston, sas, dispositifs rotatifs)
La charge biomasse (1) est introduite dans le four de pyrolyse (P) à une température comprise entre 700°C et 900°C, préférentiellement entre 750°C et 850°C, et sous une pression d'environ 3 MPa.
L'étape de pyrolyse produit un effluent gazeux (2) représentant entre 50 % et 90 % de la biomasse introduite, et un résidu solide (3) représentant le complément.
L'effluent gazeux (2) chargé en particules solides est introduit dans un ou plusieurs étages de séparation cyclonique noté (C) sur la figure 2.
L'effluent gazeux dépoussiéré (4) est refroidi de 800°C à 500°C par un échange indirect avec le fluide (20) dans un échangeur (E1).
L'effluent gazeux dépoussiéré et refroidi (5) est filtré à 500°C, sous une pression d'environ 3 MPa sur un filtre céramique (F), ce qui permet de réduire la teneur en particules solides dans ledit effluent gazeux à moins de 1 gramme par m3, et préférentiellement à moins de 0,5 gramme par m3 de gaz.

Le gaz après filtration (6) est envoyé sur des masses de captation ( MC) à 500°C, sous 2,9 MPa de manière à éliminer les composés soufrés.

Le gaz purifié et dépoussiéré (7) est réchauffé dans un échangeur (E2) avec un fluide caloporteur qui peut être le fluide process (21)
L'étape d'oxydation partielle (POX) est réalisée par mise en contact du gaz de pyrolyse purifié et dépoussiéré (7) avec un co-réactif hydrocarboné possédant un rapport H/C supérieur à celui de la biomasse utilisée comme charge, et de l'O2 à un degré de pureté supérieur à 90%, et préférentiellement supérieur à 95%, dans un réacteur de POX.

Le co-réactif hydrocarboné est par exemple du gaz naturel purifié, en particulier désulfuré. Le débit du co-réactif additionnel est déterminé de manière à réaliser la valeur finale du rapport molaire H2/CO correspondant à l'application choisie. Ce rapport H2/CO pourra faire l'objet d'une boucle de régulation dans lequel le rapport molaire H2/CO sera affiché en valeur de consigne, la variable d'action étant le débit d'hydrocarbure additionnel.
La technologie utilisée pour le réacteur de POX n'est pas un élément caractéristique de la présente invention. On pourra par exemple utiliser un réacteur de gazéification ou un réacteur POX catalytique.

Le rapport molaire H2/CO en sortie du réacteur de POX est situé entre 0,5 et 1,3 selon la charge. Ce rapport doit être le plus proche possible de la valeur requise pour l'unité de synthèse ultérieure. Dans le cas d'une synthèse FT, le rapport molaire H2/CO sera compris entre 1,1 et 2,2 selon le type de catalyseur utilisé. Avec un rapport molaire H2/CO = 1, la composition molaire de l'effluent gaz issu de la POX (8) est typiquement (en % volume) :
▪ H2 : 35-45%
▪ CO : 35-45%
▪ CO2 : 10-15%
▪ N2 : environ 5%
▪ Méthane : < 0,1%
▪ Autres (azotés) : < 5%

La température est comprise entre 1200°C et 1600°C, préférentiellement voisine de1400°C, et la pression est généralement comprise entre 3MPa et 2,5 MPa, préférentiellement voisine de 2,8MPa. La conversion est généralement supérieure à 95%, et préférentiellement supérieure à 99%.

L'effluent (8) de la POX est envoyé vers un échangeur (E3) pour être refroidi à une température comprise entre 300°C et 600°C.
Le refroidissement de l'effluent (8) est réalisé par échange sur un fluide process (22). Le fluide (22) est préférentiellement de l'eau haute pression (HP) qui est vaporisé en vapeur HP.
L'effluent (9) refroidi, possède un rapport molaire H2/CO qui est réglé à la valeur voulue au moyen du débit de co-réactif HC.

## Revendications

1. Procédé de production d'un gaz de synthèse purifié avec un rapport molaire H2/CO contrôlé à partir de biomasse lignocellulosique, comprenant les étapes suivantes:
A) une étape de pyrolyse sévère à température comprise entre 750°C et 850°C, produisant un effluent gazeux qui est envoyé à une étape de purification, et un résidu solide concentrant la majorité des impuretés, notamment les composés alcalins, et une partie des composés soufrés,
B) une étape de purification du gaz de pyrolyse issu de l'étape A consistant essentiellement en un dépoussiérage du gaz et une captation des composés soufrés sur des masses adsorbantes à base de ZnO ou de Co-Mo,
C) une étape d'oxydation partielle réalisée par mise en contact de la charge constituée par le gaz purifié issu de l'étape B avec de l'oxygène à un niveau de pureté supérieur à 90%, à une température de réaction comprise entre 1000°C et 1600°C, sous une pression comprise entre 2,5 MPa et 4 MPa, ladite étape produisant un gaz de synthèse majoritairement constitué de monoxyde de carbone et d'hydrogène dans un rapport molaire H2/CO compris entre 0,5 et 1,5 en fonction du type de charge utilisée,
D) une étape de refroidissement rapide du gaz de synthèse issu de l'étape C à une température comprise entre 300°C et 500°C.

2. Procédé de production d'un gaz de synthèse purifié selon la revendication 1 comprenant en outre une étape E de conversion du monoxyde de carbone sur une partie du flux de gaz de synthèse produit à l'étape C comprise entre 30% et 70%, permettant d'atteindre après mélange avec le flux qui n'a pas subi la conversion du monoxyde de carbone, un rapport molaire H2/CO correspondant à l'utilisation ultérieure éventuelle du gaz de synthèse.

3. Procédé de production d'un gaz de synthèse purifié selon la revendication 1 dans lequel la charge de l'étape C est constituée par le gaz purifié produit à l'étape B mélangé avec un hydrocarbure additionnel possédant un rapport H/C supérieur à celui de la biomasse.

4. Procédé de production d'un gaz de synthèse purifié selon l'une quelconque des revendications précédentes, dans lequel ledit gaz est utilisé pour la synthèse FT sur catalyseur au fer et présente un rapport CO/H2 compris entre 1,1 et 1,3.

5. Procédé de production d'un gaz de synthèse purifié selon l'une quelconque des revendications précédentes, dans lequel ledit gaz est utilisé pour la synthèse FT sur catalyseur au cobalt et présente un rapport CO/H2 compris entre 2,0 et 2,3 .

6. Procédé de production d'un gaz de synthèse purifié selon l'une quelconque des revendications précédentes, dans lequel ledit gaz est utilisé pour la synthèse de méthanol ou de diméthyléther et présente un rapport H2/(CO+CO2) compris entre 1,7 et 2,3, avec moins de 10% molaire de CO2.

7. Procédé de production d'un gaz de synthèse purifié de selon la revendication 3, dans lequel l'hydrocarbure additionnel introduit lors de l'étape d'oxydation partielle est du gaz naturel purifié.

8. Procédé de production d'un gaz de synthèse purifié selon la revendication 3, dans lequel le débit d'hydrocarbure additionnel ajouté comme co-réactif dans l'étape de POX permet de contrôler la valeur du rapport molaire H2/CO du gaz de synthèse obtenu.

9. Procédé de production d'un gaz de synthèse purifié selon l'une quelconque des revendications précédentes, dans lequel la chaleur nécessaire à l'étape de pyrolyse est apportée au moins en partie par la combustion du solide de pyrolyse.

10. Procédé de production d'un gaz de synthèse purifié selon l'une quelconque des revendications précédentes, dans lequel le refroidissement du gaz de synthèse à la sortie de l'étape d'oxydation partielle est réalisé par échange de chaleur indirect avec la biomasse, en apportant ainsi une partie de la chaleur nécessaire à l'étape de pyrolyse.

11. Procédé de production d'un gaz de synthèse purifié à partir de biomasse selon l'une quelconque des revendications précédentes, dans lequel l'étape de pyrolyse de la biomasse est précédée d'une étape de prétraitement consistant en un séchage poussé à une température comprise entre 150°C et 280°C.

12. Procédé de production d'un gaz de synthèse purifié à partir de biomasse selon l'une quelconque des revendications précédentes, dans lequel la captation des composés soufrés lors de l'étape de purification du gaz de charge de l'étape d'oxydation partielle est réalisée sur des masses de captation à base de ZnO ou Co-Mo qui sont mises en oeuvre sous forme de lits de filtration de manière à réaliser simultanément la filtration des particules solides contenues dans le gaz à traiter.

13. Procédé de production d'un gaz de synthèse purifié selon l'une quelconque des revendications 1 à 12 dans lequel ledit gaz de synthèse est utilisé pour la production d'électricité.

## Patentansprüche

1. Verfahren zum Erzeugen eines gereinigten Synthesegases mit einem bestimmten H2/CO-Molverhältnis aus Biomasse auf Lignocellulosebasis, das die folgenden Schritte umfasst:
A) einen Schritt zum starken Pyrolysieren bei einer Temperatur im Bereich zwischen 750 °C und 850 °C, wobei ein gasfö rmiger Abstrom, der in einen Reinigungsschritt geschickt wird, und ein fester Rückstand erzeugt wird, der den Großteil der Verunreinigungen, insbesondere die alkalischen Verbindungen und einen Teil der Schwefelverbindungen konzentriert,
B) einen Schritt zum Reinigen des Pyrolysegases aus Schritt A, der im Wesentlichen aus einer Entstaubung des Gases und einer Abscheidung der Schwefelverbindungen auf Sorptionsmassen auf Basis von ZnO oder Co-Mo besteht,
C) einen Schritt zum partiellen Oxidieren, der mittels Inkontaktbringen der Charge, die aus dem gereinigten Gas aus Schritt B besteht, mit Sauerstoff mit einem Reinheitsgrad größer 90 %, bei einer Reaktionstemperatur im Bereich zwischen 1.000 °C un d 1.600 °C, unter einem Druck im Bereich zwischen 2,5 MPa und 4 MPa, durchgeführt wird, wobei der Schritt ein Synthesegas erzeugt, das im Wesentlichen aus Kohlenmonoxid und Wasserstoff in einem H2/CO-Molverhältnis im Bereich zwischen 0,5 und 1,5, abhängig von Art der verwendeten Charge, besteht,
D) einen Schritt zum schnellen Abkühlen des Synthesegases aus Schritt C auf eine Temperatur im Bereich zwischen 300 °C und 500 °C.

2. Verfahren zum Erzeugen eines gereinigten Synthesegases nach Anspruch 1, das ferner einen Schritt E zum Umwandeln des Kohlenmonoxids in einem Anteil des in Schritt C erzeugten Synthesegasstroms im Bereich zwischen 30 % und 70 % umfasst, wodurch es nach dem Mischen mit dem Strom, der der Kohlenmonoxidumwandlung nicht unterzogen wurde, ermöglicht wird, ein H2/CO-Molverhältnis zu erreichen, das zur möglichen anschließenden Verwendung des Synthesegases passt.

3. Verfahren zum Erzeugen eines gereinigten Synthesegases nach Anspruch 1, wobei die Charge des Schritts C aus dem in Schritt B erzeugten gereinigten Gas, gemischt mit einem zusätzlichen Kohlenwasserstoff, besteht, der ein H/C-Verhältnis aufweist, das größer ist als das der Biomasse.

4. Verfahren zum Erzeugen eines gereinigten Synthesegases nach einem der vorhergehenden Ansprüche, wobei das Gas für die FT-Synthese auf einem Eisenkatalysator verwendet wird und ein CO/H2-Verhältnis im Bereich zwischen 1,1 und 1,3 aufweist.

5. Verfahren zum Erzeugen eines gereinigten Synthesegases nach einem der vorhergehenden Ansprüche, wobei das Gas für die FT-Synthese auf einem Cobaltkatalysator verwendet wird und ein CO/H2-Verhältnis im Bereich zwischen 2,0 und 2,3 aufweist.

6. Verfahren zum Erzeugen eines gereinigten Synthesegases nach einem der vorhergehenden Ansprüche, wobei das Gas für die Methanol- oder Dimethylethersynthese verwendet wird und ein H2/(CO+CO2)-Verhältnis im Bereich zwischen 1,7 und 2,3 mit weniger als 10 Mol-% CO2 aufweist.

7. Verfahren zum Erzeugen eines gereinigten Synthesegases nach Anspruch 3, wobei es sich bei dem zusätzlichen Kohlenwasserstoff, der während des Schritts zum partiellen Oxidieren eingeführt wird, um gereinigtes Erdgas handelt.

8. Verfahren zum Erzeugen eines gereinigten Synthesegases nach Anspruch 3, wobei es die zusätzliche Kohlenwasserstoff-Durchflussmenge, die als Coreaktant im POX-Schritt zugegeben wird, ermöglicht, den Wert des H2/CO-Molverhältnisses des erhaltenen Synthesegases zu steuern.

9. Verfahren zum Erzeugen eines gereinigten Synthesegases nach einem der vorhergehenden Ansprüche, wobei die Wärme, die im Pyrolyseschritt erforderlich ist, mindestens teilweise durch das Verbrennen des Pyrolysefeststoffs erbracht wird.

10. Verfahren zum Erzeugen eines gereinigten Synthesegases nach einem der vorhergehenden Ansprüche, wobei das Abkühlen des Synthesegases am Ausgang des Schritts zum partiellen Oxidieren durch indirekten Wärmeaustausch mit der Biomasse durchgeführt wird, wodurch ein Teil der Wärme erbracht wird, die für den Pyrolyseschritt erforderlich ist.

11. Verfahren zum Erzeugen eines gereinigten Synthesegases aus Biomasse nach einem der vorhergehenden Ansprüche, wobei dem Schritt zum Pyrolysieren der Biomasse ein Vorbehandlungsschritt vorausgeht, der aus einer forcierten Trocknung bei einer Temperatur im Bereich zwischen 150 °C und 280 °C besteht.

12. Verfahren zum Erzeugen eines gereinigten Synthesegases aus Biomasse nach einem der vorhergehenden Ansprüche, wobei das Abscheiden der Schwefelverbindungen während des Schritts zum Reinigen des Chargengases des Schritts zum partiellen Oxidieren auf Sorptionsmassen auf Basis von ZnO oder Co-Mo durchgeführt wird, die in Form von Filterbetten eingesetzt werden, um gleichzeitig die Filtration der festen Partikel durchzuführen, die in dem zu behandelnden Gas enthalten sind.

13. Verfahren zum Erzeugen eines gereinigten Synthesegases nach einem der Ansprüche 1 bis 12, wobei das Synthesegas für die Stromerzeugung verwendet wird.

## Claims

1. Process for the production of a synthesis gas that is purified with a controlled H2/CO molar ratio from lignocellulosic biomass, comprising the following stages:
A) A severe pyrolysis stage at a temperature of between 750°C and 850°C producing a gas effluent that is sent to a purification stage, and a solid residue that concentrates the majority of the impurities, in particular the alkaline compounds, and a portion of the sulfur compounds,
B) A stage for purification of the pyrolysis gas that is obtained from stage A that consists essentially of a removal of dust from the gas and a capture of sulfur compounds on adsorbent compounds based on ZnO or Co-Mo,
C) A partial oxidation stage that is carried out by contact of the feedstock that consists of purified gas obtained from stage B with oxygen at a purity level of more than 90%, at a reaction temperature of between 1000°C and 1600°C, and under a pressure of between 2.5 MPa and 4 MPa, whereby said stage produces a synthesis gas that primarily consists of carbon monoxide and hydrogen in an H2/CO molar ratio of between 0.5 and 1.5 based on the type of feedstock that is used,
D) A rapid cooling stage of the synthesis gas that is obtained from stage C at a temperature of between 300°C and 500°C.

2. Process for the production of a purified synthesis gas according to claim 1 that also comprises a stage E for carbon-monoxide conversion on a portion of the flow of synthesis gas produced in stage C of between 30% and 70%, making it possible to attain - after mixing with the flow that has not undergone the carbon-monoxide conversion - an H2/CO molar ratio that corresponds to the possible subsequent use of the synthesis gas.

3. Process for the production of a purified synthesis gas according to claim 1, in which the feedstock of stage C consists of purified gas that is produced in stage B that is mixed with an additional hydrocarbon that has an H/C ratio that is more than that of the biomass.

4. Process for the production of a purified synthesis gas according to any of the preceding claims, in which said gas is used for the FT synthesis on a catalyst with iron and has a CO/H2 ratio of between 1.1 and 1.3.

5. Process for the production of a purified synthesis gas according to any of the preceding claims, in which said gas is used for the FT synthesis on the catalyst with cobalt and has a CO/H2 ratio of between 2.0 and 2.3.

6. Process for the production of a purified synthesis gas according to any of the preceding claims, in which said gas is used for the synthesis of methanol or dimethyl ether and has an H2/(CO + CO2) ratio of between 1.7 and 2.3, with less than 10 mol% of CO2.

7. Process for the production of a purified synthesis gas according to claim 3, in which the additional hydrocarbon that is introduced during the partial oxidation stage is purified natural gas.

8. Process for the production of a purified synthesis gas according to claim 3, in which the additional hydrocarbon flow that is added as a co-reagent in the POX stage makes it possible to monitor the value of the H2/CO molar ratio of the synthesis gas that is obtained.

9. Process for the production of a purified synthesis gas according to any of the preceding claims, in which the heat that is necessary to the pyrolysis stage is provided at least in part by the combination of the pyrolysis solid.

10. Process for the production of a purified synthesis gas according to any of the preceding claims, in which the cooling of the synthesis gas at the output of the partial oxidation stage is carried out by indirect heat exchange with the biomass, by thus providing a portion of the heat that is necessary to the pyrolysis stage.

11. Process for the production of a purified synthesis gas from biomass according to any of the preceding claims, wherein the pyrolysis stage of the biomass is preceded by a pretreatment stage that consists of a drying pushed to a temperature of between 150°C and 280°C.

12. Process for the production of a purified synthesis gas from biomass according to any of the preceding claims, in which the capture of the sulfur compounds during the purification stage of the feedstock gas of the partial oxidation stage is carried out on capture compounds based on ZnO or Co-Mo that are used in the form of filtration beds so as to carry out simultaneously the filtration of the solid particles that are contained in the gas to be treated.

13. Process for the production of a purified synthesis gas according to any of claims 1 to 12, in which said synthesis gas is used for the production of electricity.
